# EUROPEAN PATENT SPECIFICATION

(11) **EP 4 418 613 B1**
(45) Date of publication and mention of the grant of the patent: **26.08.2026**
(21) Application number: 24158119.8
(22) Date of filing: 16.02.2024
(51) Int. Cl.: H04L 9/40, H04W 12/03

(54) **SYSTEM AND METHOD FOR SECURING AND CONTROLLING NATIONALLY PROTECTED WARGAME TRAINING DATA FLOWS THROUGH A SHARED NETWORK**
SYSTEM UND VERFAHREN ZUR SICHERUNG UND STEUERUNG NATIONAL GESCHÜTZTER WARGAME-TRAININGSDATENFLÜSSE DURCH EIN GEMEINSAM GENUTZTES NETZWERK
SYSTÈME ET PROCÉDÉ DE SÉCURISATION ET DE COMMANDE DE FLUX DE DONNÉES D'APPRENTISSAGE DE GUERRE À PROTECTION NATIONALE PAR L'INTERMÉDIAIRE D'UN RÉSEAU PARTAGÉ

(30) Priority: 17.02.2023 US 202318111349
(43) Date of publication of application: 21.08.2024
(73) Proprietor: Rockwell Collins, Inc., Cedar Rapids, IA 52498 (US)
(72) Inventor: HOWARD, Sean D., Cedar Rapids, IA (US); ANDERSON, Meghan K., Elkhorn, NE (US); DRAHOS, Jonathan D., Belle Plaine, IA (US)
(74) Representative: Dehns

(56) References cited:
- US-A1- 2021 021 579
- US-A1- 2022 070 154

## Description

### BACKGROUND

Joint coalition military exercises require a certain amount of data sharing between national or coalition players. For example, successful wargame simulations may require sharing among participant entities of time-space-position information (TSPI) produced by aircraft or gathered by surveillance systems and/or optical sensors throughout the test range. However, players may wish to secure air combat maneuvering information (ACMI) and/or other weapons simulation or capability data recorded in-game (e.g., in-flight) aboard individual participant aircraft. At the coalition level, the result is often either a security conflict or insufficient data sharing between participating entities for effective training operations. For example, United States participation in coalition exercises is contingent on the use of US cryptographic solutions for the protection of all data relating to weapons systems of US manufacture. Coalition partners may likewise use US weapons systems, but may not trust US cryptographic solutions for their own data security needs. From a coalition partner's perspective,

US 2021/021579 A1 discloses an SD-WAN system in which sender-generated traffic containing encrypted and clear-text portions traverses intermediary sender-side and receiver-side network devices. The sender-side device selectively encrypts clear-text portions or, when a threshold is not met, both encrypted and unencrypted portions, and forwards the resulting packets via an encrypted tunnel to the receiver-side device for decryption and onward delivery.

### SUMMARY

In a first aspect, a system for controlling locally or nationally protected data flow through a shared (e.g., multinational) network is provided as defined by claim 1. Accordingly, the protected portion is encrypted on multiple levels, according to both local and host encryption keys. Destinations (e.g., other vehicles and/or ground control facilities) receiving the encrypted exercise data via the secure datalink may fully decrypt the shared portion according to infrastructure decryption keys. However, only those destinations and/or entities having access to the local decryption keys may be able to fully decrypt and access the protected portion of the exercise data, which remains partially encrypted or pre-encrypted, and thus inaccessible, to other destinations and associated entities. For example, destinations associated with the local entity and having access to the local decryption keys may fully decrypt and access the full set of exercise data, including protected and shared portions, while destinations associated with the infrastructure entity (e.g., a nation or other entity hosting the security infrastructure) or other coalition member entities (e.g., allied nations or exercise participants) not having access to the local decryption keys may decrypt and access only the shared portion.

In some embodiments, the local destination includes a local mission operations console (MOC), e.g., a ground-based facility including an LCR configured for decryption of the protected portion of exercise data according to the local decryption keys.

In some embodiments, the local destination includes an infrastructure decryptor having access to the infrastructure decryption keys and thereby capable of decrypting the shared portion of the exercise data received through the security infrastructure via the secure datalink.

In some embodiments, the LCR is embodied an aircraft or other vehicle controlled by and/or associated with the local entity.

In some embodiments, the vehicle is an uncrewed aircraft system (UAS) or other partially or fully autonomous uncrewed vehicle.

In some embodiments, the LCR is embodied aboard a manpack carried by a ground-based combatant independent or, or outside of, a vehicle.

In some embodiments, the local entity is a nation or an organization of allied nations.

In a further aspect, a method for locally or nationally controlling and protecting sensitive exercise data traveling through a security infrastructure within a shared network is also provided as defined by claim 8.

In some embodiments, the method includes transmitting, via secure datalink, the infrastructure encrypted data through the security infrastructure to destinations within the shared network, e.g., other local destinations associated with the local entity, other host destinations associated with the infrastructure host entity, and/or third-party destinations associated with other participating entities connected to the shared network.

In some embodiments, the LCR is embodied aboard an aircraft or other vehicle controlled by the local entity.

In some embodiments, the LCR is an uncrewed aircraft system (UAS) or other partially or fully autonomous uncrewed vehicle.

In some embodiments, the LCR is embodied aboard a manpack carried by a ground-based combatant or other individual (e.g., detached from or otherwise outside a vehicle).

In some embodiments, each entity is a national or multinational organization/coalition.

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are example and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1 is a diagrammatic of a test range environment illustrating shared and entity protected data flows through a shared network according to example embodiments of this disclosure; and
FIG. 2 is a block diagram illustrating selective local protection of data flows through the shared network of FIG. 1; and
FIG. 3 is a flow diagram illustrating a method for controlling local protection of data flows through a shared network according to example embodiments of this disclosure.

### DETAILED DESCRIPTION

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination or sub-combination of two or more such features, along with any other features which may not necessarily be expressly described or inherently present in the instant disclosure.

Broadly speaking, embodiments of the inventive concepts disclosed herein are directed to systems and methods for providing selectable localized data security for participants of joint coalition exercises involving national entities, formal multinational coalitions or alliances (e.g., North Atlantic Treaty Organization (NATO), Five Eyes (FVEY)), or ad hoc coalitions associated with particular exercises (e.g., Rim of the Pacific (RIMPAC)). For example, in exercise environments mandating use of a US-approved security infrastructure, coalition participants may provide additional local protection, at their sole discretion and under their sole control, above and beyond the existing security infrastructure.

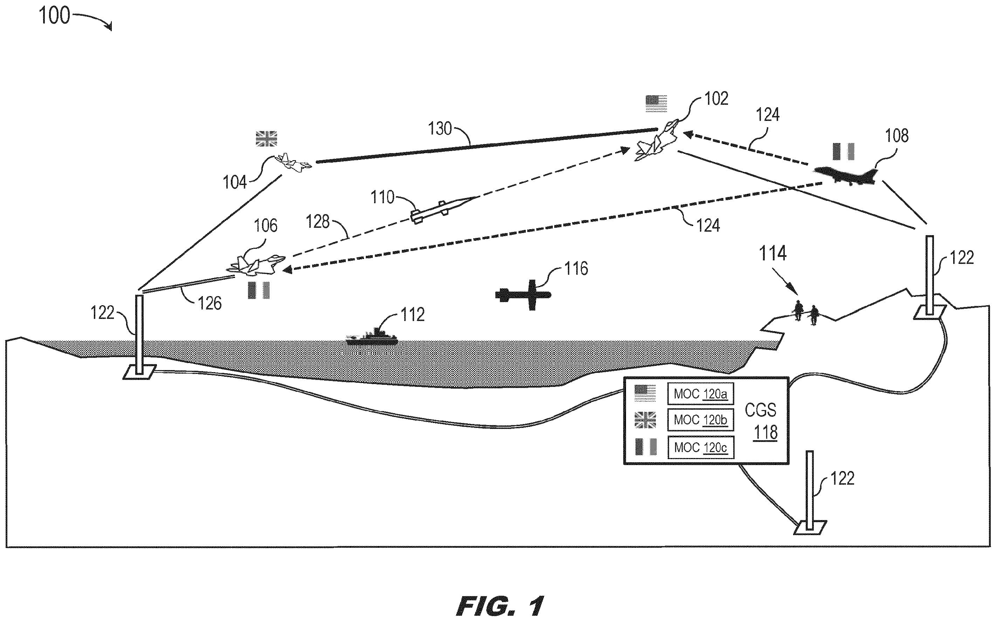

Referring now to FIG. 1, a joint coalition exercise test range network environment 100 is disclosed. The network environment 100 may include multi-entity exercise participants, e.g., United States (US) aircraft 102, United Kingdom (UK) aircraft 104, Italian (IT) aircraft 106, 108, IT ordnance 110, water-based combat ship 112, ground-based combatants 114, and uncrewed aircraft 116 (e.g., uncrewed aircraft system (UAS), including remotely piloted, semi-autonomous, or autonomous aerial vehicles). The network environment 100 may further include shared network infrastructure, e.g., common ground system 118 (CGS), mission operations consoles 120a-120c (MOC), and radio frequency (RF) antennas 122.

In embodiments, as the multi-entity participants 102, 104, 106, 108, 112, 114, 116 carry out exercises within a test range wherein the network environment 100 is embodied, both shared and protected data may be generated and transmitted through the shared network. For example, the RF antennas 122 may provide two-way data transfer between exercise participants and the CGS 118, which may serve as a coalition-wide ground-based command and control center. In embodiments, the CGS 118 may house dedicated MOCs, each MOC (e.g., US MOC 120a, UK MOC 120b, IT MOC 120c) controlled by a specific entity (e.g., or group of entities) and wherein data sensitive to that entity may be reviewed without intervention from other entities. For example, each MOC 120a-120c may be a room or group of rooms partitioned (e.g., physically, electronically) from other MOCs within a larger CGS 118 facility.

In embodiments, all data flowing through the network environment 100 may include a public or shared portion, or a portion of exercise data to which access is available to all exercise participants and participating coalition entities. For example, TSPI data, e.g., telemetry data tracking the aircraft 102, 104, 106, 108 and ordnance 110 as collected by ground-based surveillance facilities, may be treated as unclassified data shared (124) with all participants, e.g., relayed via the RF antenna 122 and the IT aircraft 108. It should be noted that unclassified data 124 may still be protected at the coalition level, e.g., via US-based infrastructure (e.g., host) encryption/decryption according to shared encryption and decryption keys available to all participants.

Further, in embodiments, exercise data flowing through the network environment 100 may include protected portions, or portions of exercise data sensitive to a particular participating entity and which said entity may wish to protect, even from other allied participants, in the interest of national security. For example, the IT aircraft 106 may generate inflight both ACMI data 126 and weapons flyout data 128 associated with the simulated deployment of ordnance 110. While said Italian ACMI and weapons data 126, 128 may likewise be protected by US-based infrastructure encryption/decryption, it may be in the Italian national interest to further protect, even from the US, the UK, and other allied exercise participants, said ACMI and weapons data 126, 128 en route through the network environment 100 from the IT aircraft 106 to the IT MOC 120c.

In some embodiments, nations/coalition entities may partially or fully share a MOC 120a-120c (e.g., at a coalition or alliance level) or may have an interest in selective additional protection of sensitive exercise data, whereby protected portions may be shared among a subset of entity participants but further protected from other entity participants outside that subset. For example, US-UK relations (e.g., as co-parties not only to NATO but to FVEY and/or other alliances and agreements to which Italy may not be a party) may provide that access to some or all ACMI data 130 may be shared by US and UK MOCs 120a, 120b but denied to the IT MOC 120c.

In embodiments, while all exercise data flows 124, 126, 128, 130 through the network environment 100 may be subject to infrastructure encryption/decryption (e.g., via US-based host cryptographic roots of trust and associated host encryption/decryption keys shared with all entity participants), each entity may define a protected portion or portions of any data in transit between its exercise participants and the MOC 120a-120c controlled by that entity. For example, each entity may preemptively apply their own local cryptographic solutions to said protected portions of exercise data prior to that exercise data entering into the underlying (e.g., US) security infrastructure. In embodiments, local entity protection may create locally protected datasets (e.g., IT ACMI data 126, IT weapons data 128, US/UK ACMI data 130) within the greater flow of exercise data. For example, each locally protected dataset 126, 128, 130, as a portion of the exercise data flow as a whole, may be infrastructure encrypted according to infrastructure (e.g., US) encryption keys based on infrastructure roots of trust and shared across the exercise coalition. Further, each locally protected dataset 126, 128, 130 may include an additional layer of encryption based on local encryption keys (and local decryption keys provided at the respective MOCs 120a-120c), the local encryption keys associated with local roots of trust and inaccessible to other entities. For example, locally protected datasets 126, 128, 130 may likewise be protected from US decryption at the infrastructure level.

In embodiments, systems for local entity encryption of protected portions of exercise data in transit through the network environment 100 may be embodied aboard participant aircraft 102, 104, 106, 108; aboard water-based combat ships 112; aboard manpacks carried by ground-based mobile combatants 114; uncrewed aircraft 116; and/or within a MOC 120a-120c.

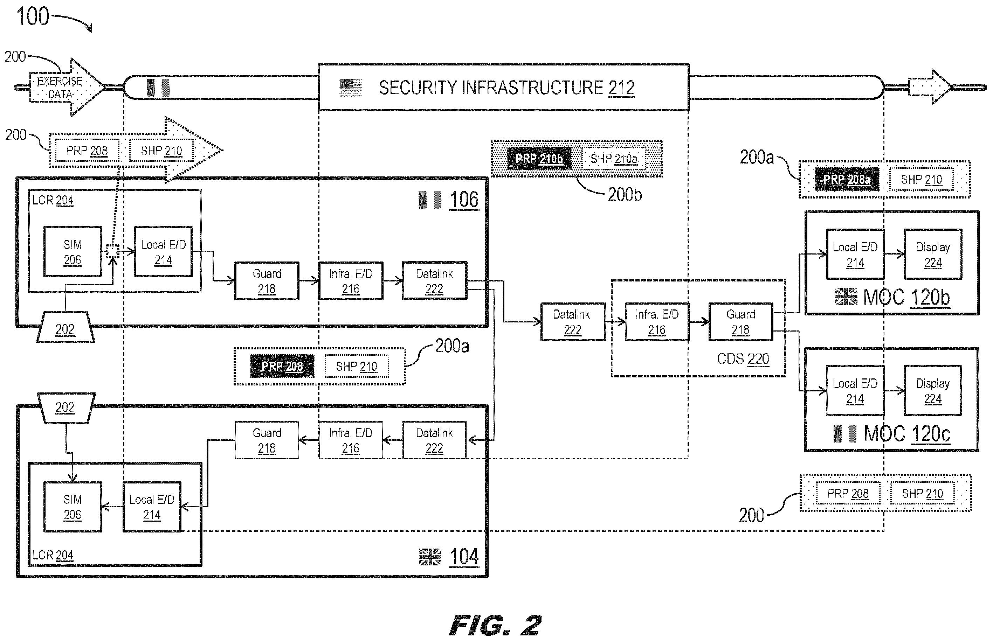

Referring now to FIG. 2, the network environment 100 is shown.

In embodiments, the IT aircraft 106 may generate exercise datasets 200 including weapons data, ACMI data, TSPI data, and other relevant data points generated by sensors 202 and local computing resources 204 (LCR; e.g., local processors, local memory) aboard each aircraft. For example, aircraft sensors 202 may track other exercise participants (via, e.g., surveillance radar, optical sensors), and LCR 204 may include simulators 206 for generating or simulating real time weapons flyout data (128, FIG. 1) and/or ACMI data (126, FIG. 1). Any exercise datasets 200 generated and/or simulated aboard the IT aircraft 106 may be stored onboard (e.g., via memory and/or like data storage, not shown) prior to protection and/or transmission through the network environment 100.

In embodiments, the LCR 204 aboard IT aircraft 106, 108 may include nation-specific (e.g., entity-specific, coalition-specific, local-specific) protection rules providing for the designation within each generated exercise datasets 200 of protected portions 208 (PRP) and shared portions 210 (SHP). For example, shared portions 210 of exercise datasets 200 may include TSPI data or any other data suitable for sharing with any otherwise authorized participants within the network environment, subject to network-wide security infrastructure 212 (e.g., infrastructure computing resource (ICR), host infrastructure, host computing resource (HCR)). Protected portions 208 of each exercise dataset 200 may include weapons flyout data 128, ACMI data 126, and any other generated or sensed exercise data determined by an entity (e.g., Italy) to be in its local or national security interest to protect from other exercise participants, other coalition partners, or other entities.

In embodiments, the LCR 204 may provide pre-encryption of the protected portion 208 of each exercise dataset 200 according to local encryption/decryption keys 214 not shared with, and otherwise inaccessible to, the larger security infrastructure or other exercise participants. For example, the local encryption and decryption keys 214 may be based on different roots of trust than the roots of trust on which host encryption/decryption keys 216 used by the host security infrastructure 212 are based.

In embodiments, each locally protected exercise dataset 200a including a shared portion 210 and locally encrypted protected portion 208a may be sent (e.g., via host data guard 218) through infrastructure encryption 216. For example, infrastructure encryption 216 may provide for the encryption of each locally protected exercise dataset 200a (e.g., including unencrypted shared portions 210 and locally encrypted protected portions 208a) according to infrastructure encryption/decryption keys 216 (based, as noted above, on different roots of trust than the local encryption/decryption keys 214 used for local protection by each entity). In some embodiments, the data guard 218 and infrastructure encryption/decryption 216 may be combined within a cross-domain solution 220 (CDS) apparatus or device.

In embodiments, each fully encrypted exercise dataset 200b (e.g., including an infrastructure-encrypted shared portion 210a and dual-encrypted protected portion 208b, subject to local pre-encryption 214 as well as infrastructure encryption 216) may be sent via secure datalink 222 through the security infrastructure 212 to other exercise participants and ground-based MOCs (120a-120c, FIG. 1) throughout the network environment 100. For example, non-Italian participants and MOCs (e.g., UK aircraft 104, UK MOC 120b) may receive the fully encrypted exercise dataset 200b and obtain, via infrastructure decryption 216 of the encrypted shared portion 210a, TSPI data and any other shared exercise data cleared or authorized for sharing throughout the network. However, the UK and other non-Italian coalition entities may not have access to Italian local encryption/decryption keys 214 and may therefore be unable to access even the infrastructure-decrypted (but still locally-encrypted) protected portion 208a. In embodiments, only the Italian MOC 120c may be able, via local encryption/decryption keys 214, to fully decrypt and access the protected portions 208 of each exercise dataset 200 generated and transmitted by Italian aircraft 106 (e.g., for display 224 and/or further processing). Similarly, any protected portions 208 of exercise datasets 200 sent through the network environment 100 by the Italian MOC 120c may be fully decryptable and fully accessible only to the LCR 204 aboard the Italian aircraft 106.

Embodiments of the inventive concepts disclosed herein may facilitate multi-entity joint exercises including national entities who might reject complete data sharing as otherwise required by US-based security infrastructure. Instead, national entities can select which exercise data includes defense secrets worthy of protection from other participants while sharing appropriate exercise data within a secure infrastructure.

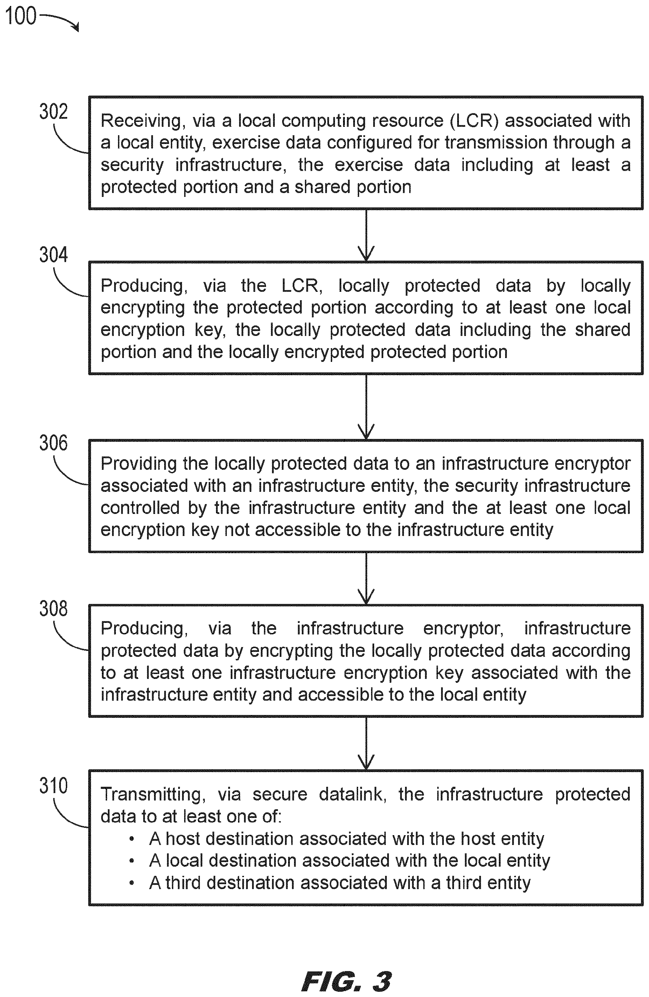

Referring to FIG. 3, the method 300 may be implemented by one or more aircraft or participants operating within the network environment 100 and may include the following steps.

At a step 302, a local computing resource (LCR) of a local entity-controlled exercise participant receives exercise data including both shared portions and protected portions, i.e., data including defense secrets that the local entity wishes to conceal from other participating entities. For example, the exercise data may include entity-specific ACMI and weapons data collected aboard an aircraft or other vehicle in addition to TSPI data appropriate for sharing. In some embodiments, the entity is a single nation, group of nations, treaty or military alliance, or ad hoc coalition. In some embodiments, the exercise participant includes an aircraft (e.g., crewed or uncrewed), watercraft, and/or mobile ground combatant (e.g., ground vehicles or individual manpacks).

At a step 304, the LCR locally protects the designated protected portion of the exercise data by encrypting (e.g., pre-encrypting) the protected portion according to local encryption/decryption keys based on local roots of trust. For example, local encryption keys and/or associated roots of trust may be specific to the local entity and shared only with assets controlled by that entity, such that any locally encrypted data is inaccessible to any other entities or participants.

At a step 306, the locally protected data (e.g., wherein the protected portion has been locally encrypted, but the shared portion has not) is provided to a network security infrastructure associated with (e.g., controlled by) a host (infrastructure) entity, e.g., another nation, group, alliance, or coalition also participating in the exercise (but which does not have access to the local encryption keys).

At a step 308, the security infrastructure (e.g., via a host computing resource (HCR)) encrypts the locally protected exercise data according to infrastructure encryption/decryption keys controlled by the infrastructure entity (e.g., which may be based on different roots of trust than the local encryption/decryption keys), producing fully infrastructure-encrypted exercise data. For example, the protected portion of the exercise data is now multilayer (e.g., dual-layer) encrypted according to multiple different sets of encryption/decryption keys.

In some embodiments, the method 300 includes an additional step 310. At the step 310, the infrastructure-encrypted exercise data is transmitted via secure datalink through the network environment to local destinations, e.g., those participants, assets, and/or mobile operations consoles (MOC) affiliated with the local encrypting entity, and host destinations, e.g., those participants, assets, and/or MOCs affiliated with the infrastructure entity or with other participating entities within the exercise coalition, group, or alliance. For example, as the infrastructure encryption keys are shared with all participating entities, any entity receiving the infrastructure -encrypted exercise data may decrypt and access the shared portion via shared infrastructure encryption keys. However, other entities may not be able to access protected portions without access to any local encryption keys used to pre-encrypt said protected portions.

### CONCLUSION

It is to be understood that embodiments of the methods disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to one or more of the steps disclosed herein.

Although inventive concepts have been described with reference to the embodiments illustrated in the attached drawing figures, the scope of the invention is as defined by the claims. Components illustrated and described herein are merely examples of a system/device and components that may be used to implement embodiments of the inventive concepts and may be replaced with other devices and components without departing from the scope of the claims. Furthermore, any dimensions, degrees, and/or numerical ranges provided herein are to be understood as non-limiting examples unless otherwise specified in the claims.

## Claims

1. A system for controlling locally protected data flow through a shared network, the system comprising:
a local computing resource, LCR, (204) including one or more processors and associated with a local entity, the LCR configured to:
generate exercise data configured for transmission through a security infrastructure, the exercise data comprising a protected portion and a shared portion, the security infrastructure controlled by an infrastructure entity;
and
produce locally protected data by locally encrypting the protected portion of the exercise data according to at least one local encryption key associated with the local entity, the locally protected data comprising the shared portion and the locally encrypted protected portion;
at least one data guard configured for transferring the locally protected data to an infrastructure encryptor;
the infrastructure encryptor configured to produce infrastructure protected data by encrypting the protected and shared portions of the locally protected data according to at least one infrastructure encryption key (214, 216) associated with the infrastructure entity,
wherein the at least one infrastructure encryption key is accessible to the local entity and the at least one local encryption key is not accessible to the infrastructure entity;
and
a secure datalink (222) communicatively coupled to the infrastructure encryptor, the secure datalink configured for transmission of the infrastructure protected data to at least one of:
an infrastructure destination associated with the infrastructure entity;
a local destination associated with the local entity;
or
a third destination associated with a third entity, wherein one or more of the infrastructure entity, the local entity, or the third entity are members of a coalition.

2. The system of Claim 1, wherein the LCR is a first LCR, and wherein:
the local destination is a local mission operations console including at least one second LCR configured for decryption of the locally protected data according to the at least one local encryption key (214, 216).

3. The system of Claim 1 or 2, wherein the local destination includes at least one infrastructure decryptor configured for decryption of the infrastructure protected data according to the at least one infrastructure encryption key.

4. The system of any preceding Claim, wherein the LCR is embodied aboard a vehicle associated with the local entity.

5. The system of any preceding Claim, wherein the LCR is embodied aboard an uncrewed vehicle.

6. The system of any of claims 1 to 3, wherein the LCR is embodied aboard a manpack associated with the local entity.

7. The system of any preceding Claim, wherein each of the local entity and the infrastructure entity comprises either a nation or a multinational organization.

8. A method for controlling locally protected data flow through a shared network, the system comprising:
receiving, via a local computing resource, LCR, (204) associated with a local entity, exercise data configured for transmission through a security infrastructure, the exercise data including at least a protected portion and a shared portion;
producing, via the LCR, locally protected data by locally encrypting the protected portion according to at least one local encryption key (214, 216) associated with the local entity, the locally protected data including the shared portion and the locally encrypted protected portion;
providing the locally protected data to an infrastructure encryptor associated with an infrastructure entity, the security infrastructure controlled by the infrastructure entity and the at least one local encryption key not accessible to the infrastructure entity;
and
producing, via the infrastructure encryptor, infrastructure protected data by encrypting the protected and shared portions of the locally protected data according to at least one infrastructure encryption key associated with the infrastructure entity and accessible to the local entity.

9. The method of Claim 8, further comprising:
transmitting, via a secure datalink, the infrastructure protected data to at least one of:
an infrastructure destination associated with the infrastructure entity;
a local destination associated with the local entity;
or
a third destination associated with a third entity, wherein one or more of the infrastructure entity, the local entity, or the third entity are members of a coalition.

10. The method of Claim 8 or 9, wherein the LCR is embodied aboard a vehicle associated with the local entity.

11. The method of Claim 8 or 9, wherein the LCR is embodied aboard an uncrewed vehicle.

12. The method of Claim 8 or 9, wherein the LCR is embodied aboard a manpack associated with the local entity.

13. The method of any of Claims 8 to 12, wherein each of the local entity and the infrastructure entity comprises either a nation or a multinational organization.

## Patentansprüche

1. System zum Steuern eines lokal geschützten Datenflusses durch ein gemeinsam genutztes Netzwerk, wobei das System umfasst:
eine lokale Rechenressource, LCR, (204), die einen oder mehrere Prozessoren umfasst und einer lokalen Entität zugeordnet ist,
wobei die LCR dazu ausgebildet ist:
Übungsdaten zu erzeugen, die für eine Übertragung durch eine Sicherheitsinfrastruktur ausgebildet sind, wobei die Übungsdaten einen geschützten Teil und einen gemeinsam genutzten Teil umfassen, wobei die Sicherheitsinfrastruktur durch eine Infrastrukturentität gesteuert wird;
und
lokal geschützte Daten zu erzeugen, indem der geschützte Teil der Übungsdaten gemäß mindestens einem lokalen Verschlüsselungsschlüssel, der der lokalen Entität zugeordnet ist, lokal verschlüsselt wird, wobei die lokal geschützten Daten den gemeinsam genutzten Teil und den lokal verschlüsselten geschützten Teil umfassen;
mindestens einen Datenwächter, der zum Übertragen der lokal geschützten Daten an einen Infrastruktur-Verschlüsseler ausgebildet ist;
den Infrastruktur-Verschlüsseler, der dazu ausgebildet ist, infrastrukturgeschützte Daten zu erzeugen, indem der geschützte und der gemeinsam genutzte Teil der lokal geschützten Daten gemäß mindestens einem Infrastruktur-Verschlüsselungsschlüssel (214, 216), der der Infrastrukturentität zugeordnet ist, verschlüsselt werden,
wobei der mindestens eine Infrastruktur-Verschlüsselungsschlüssel für die lokale Entität zugänglich ist und der mindestens eine lokale Verschlüsselungsschlüssel für die Infrastrukturentität nicht zugänglich ist;
und
eine sichere Datenverbindung (222), die kommunikativ mit dem Infrastruktur-Verschlüsseler gekoppelt ist, wobei die sichere Datenverbindung zur Übertragung der infrastrukturgeschützten Daten an mindestens eines von Folgendem ausgebildet ist:
ein Infrastrukturziel, das der Infrastrukturentität zugeordnet ist;
ein lokales Ziel, das der lokalen Entität zugeordnet ist;
oder
ein drittes Ziel, das einer dritten Entität zugeordnet ist,
wobei eine oder mehrere von der Infrastrukturentität, der lokalen Entität oder der dritten Entität Mitglieder einer Koalition sind.

2. System nach Anspruch 1, wobei die LCR eine erste LCR ist, und wobei:
das lokale Ziel eine lokale Missionsbetriebskonsole ist, die mindestens eine zweite LCR umfasst, die zur Entschlüsselung der lokal geschützten Daten gemäß dem mindestens einen lokalen Verschlüsselungsschlüssel (214, 216) ausgebildet ist.

3. System nach Anspruch 1 oder 2, wobei das lokale Ziel mindestens einen Infrastruktur-Entschlüsseler umfasst, der zur Entschlüsselung der infrastrukturgeschützten Daten gemäß dem mindestens einen Infrastruktur-Verschlüsselungsschlüssel ausgebildet ist.

4. System nach einem der vorhergehenden Ansprüche, wobei die LCR an Bord eines Fahrzeugs ausgeführt ist, das der lokalen Entität zugeordnet ist.

5. System nach einem der vorhergehenden Ansprüche, wobei die LCR an Bord eines unbemannten Fahrzeugs ausgeführt ist.

6. System nach einem der Ansprüche 1 bis 3, wobei die LCR an Bord eines Manpacks ausgeführt ist, das der lokalen Entität zugeordnet ist.

7. System nach einem der vorhergehenden Ansprüche, wobei jede von der lokalen Entität und der Infrastrukturentität entweder eine Nation oder eine multinationale Organisation umfasst.

8. Verfahren zum Steuern eines lokal geschützten Datenflusses durch ein gemeinsam genutztes Netzwerk, wobei das Verfahren umfasst:
Empfangen, über eine lokale Rechenressource, LCR, (204), die einer lokalen Entität zugeordnet ist, von Übungsdaten, die für eine Übertragung durch eine Sicherheitsinfrastruktur ausgebildet sind, wobei die Übungsdaten mindestens einen geschützten Teil und einen gemeinsam genutzten Teil umfassen;
Erzeugen, über die LCR, von lokal geschützten Daten, indem der geschützte Teil gemäß mindestens einem lokalen Verschlüsselungsschlüssel (214, 216), der der lokalen Entität zugeordnet ist, lokal verschlüsselt wird, wobei die lokal geschützten Daten den gemeinsam genutzten Teil und den lokal verschlüsselten geschützten Teil umfassen;
Bereitstellen der lokal geschützten Daten an einen Infrastruktur-Verschlüsseler, der einer Infrastrukturentität zugeordnet ist, wobei die Sicherheitsinfrastruktur durch die Infrastrukturentität gesteuert wird und der mindestens eine lokale Verschlüsselungsschlüssel für die Infrastrukturentität nicht zugänglich ist;
und
Erzeugen, über den Infrastruktur-Verschlüsseler, von infrastrukturgeschützten Daten, indem der geschützte und der gemeinsam genutzte Teil der lokal geschützten Daten gemäß mindestens einem Infrastruktur-Verschlüsselungsschlüssel, der der Infrastrukturentität zugeordnet und für die lokale Entität zugänglich ist, verschlüsselt werden.

9. Verfahren nach Anspruch 8, ferner umfassend:
Übertragen, über eine sichere Datenverbindung, der infrastrukturgeschützten Daten an mindestens eines von Folgendem:
ein Infrastrukturziel, das der Infrastrukturentität zugeordnet ist;
ein lokales Ziel, das der lokalen Entität zugeordnet ist;
oder
ein drittes Ziel, das einer dritten Entität zugeordnet ist,
wobei eine oder mehrere von der Infrastrukturentität, der lokalen Entität oder der dritten Entität Mitglieder einer Koalition sind.

10. Verfahren nach Anspruch 8 oder 9, wobei die LCR an Bord eines Fahrzeugs ausgeführt ist, das der lokalen Entität zugeordnet ist.

11. Verfahren nach Anspruch 8 oder 9, wobei die LCR an Bord eines unbemannten Fahrzeugs ausgeführt ist.

12. Verfahren nach Anspruch 8 oder 9, wobei die LCR an Bord eines Manpacks ausgeführt ist, das der lokalen Entität zugeordnet ist.

13. Verfahren nach einem der Ansprüche 8 bis 12, wobei jede von der lokalen Entität und der Infrastrukturentität entweder eine Nation oder eine multinationale Organisation umfasst.

## Revendications

1. Système de commande de flux de données à protection locale à travers un réseau partagé, le système comprenant :
une ressource informatique locale, LCR, (204) comportant un ou plusieurs processeurs et associée à une entité locale, la LCR étant configurée pour :
générer des données d'exercice configurées pour être transmises à travers une infrastructure de sécurité, les données d'exercice comprenant une partie protégée et une partie partagée, l'infrastructure de sécurité étant commandée par une entité d'infrastructure ;
et
produire des données à protection locale en chiffrant localement la partie protégée des données d'exercice selon au moins une clé de chiffrement locale associée à l'entité locale, les données à protection locale comprenant la partie partagée et la partie protégée chiffrée localement ;
au moins une gardien de données configuré pour transférer les données à protection locale vers un chiffreur d'infrastructure ;
le chiffreur d'infrastructure configuré pour produire des données protégées par l'infrastructure en chiffrant les parties protégée et partagée des données à protection locale selon au moins une clé de chiffrement d'infrastructure (214, 216) associée à l'entité d'infrastructure,
dans lequel au moins une clé de chiffrement d'infrastructure est accessible à l'entité locale et l'au moins une clé de chiffrement locale n'est pas accessible à l'entité d'infrastructure ;
et
une liaison de données sécurisée (222) couplée de manière communicative au chiffreur d'infrastructure, la liaison de données sécurisée étant configurée pour la transmission des données protégées par l'infrastructure à au moins l'une de :
une destination d'infrastructure associée à l'entité d'infrastructure ;
une destination locale associée à l'entité locale ;
ou
une troisième destination associée à une troisième entité, dans lequel une ou plusieurs de l'entité d'infrastructure, l'entité locale ou la troisième entité sont membres d'une coalition.

2. Système selon la revendication 1, dans lequel la LCR est une première LCR, et dans lequel :
la destination locale est une console d'opérations de mission locale comportant au moins une seconde LCR configurée pour le déchiffrement des données à protection locale selon l'au moins une clé de chiffrement locale (214, 216).

3. Système selon la revendication 1 ou 2, dans lequel la destination locale comporte au moins un déchiffreur d'infrastructure configuré pour le déchiffrement des données protégées par l'infrastructure selon l'au moins une clé de chiffrement d'infrastructure.

4. Système selon une quelconque revendication précédente, dans lequel la LCR est incorporée à bord d'un véhicule associé à l'entité locale.

5. Système selon une quelconque revendication précédente, dans lequel la LCR est incorporée à bord d'un véhicule sans équipage.

6. Système selon l'une quelconque des revendications 1 à 3, dans lequel la LCR est incorporée à bord d'un sac portatif associé à l'entité locale.

7. Système selon une quelconque revendication précédente, dans lequel chacune de l'entité locale et de l'entité d'infrastructure comprend soit une nation, soit une organisation multinationale.

8. Procédé de commande de flux de données à protection locale à travers un réseau partagé, le système comprenant :
la réception, par l'intermédiaire d'une ressource informatique locale, LCR, (204) associée à une entité locale, de données d'exercice configurées pour la transmission à travers une infrastructure de sécurité, les données d'exercice comportant au moins une partie protégée et une partie partagée ;
la production, à travers la LCR, de données à protection locale en chiffrant localement la partie protégée selon au moins une clé de chiffrement locale (214, 216) associée à l'entité locale, les données à protection locale comportant la partie partagée et la partie protégée chiffrée localement ;
la fourniture des données à protection locale à un chiffreur d'infrastructure associé à une entité d'infrastructure, l'infrastructure de sécurité commandée par l'entité d'infrastructure et l'au moins une clé de chiffrement locale non accessible à l'entité d'infrastructure ;
et
la production, à travers le chiffreur d'infrastructure, de données protégées par l'infrastructure en chiffrant les parties protégée et partagée des données à protection locale selon au moins une clé de chiffrement d'infrastructure associée à l'entité d'infrastructure et accessible à l'entité locale.

9. Procédé selon la revendication 8, comprenant en outre :
la transmission, par l'intermédiaire d'une liaison de données sécurisée, des données protégées par l'infrastructure à au moins l'une de :
une destination d'infrastructure associée à l'entité d'infrastructure ;
une destination locale associée à l'entité locale ;
ou
une troisième destination associée à une troisième entité, dans lequel une ou plusieurs de l'entité d'infrastructure, l'entité locale ou la troisième entité sont membres d'une coalition.

10. Procédé selon la revendication 8 ou 9, dans lequel la LCR est incorporée à bord d'un véhicule associé à l'entité locale.

11. Procédé selon la revendication 8 ou 9, dans lequel la LCR est incorporée à bord d'un véhicule sans équipage.

12. Procédé selon la revendication 8 ou 9, dans lequel la LCR est incorporée à bord d'un sac portatif associé à l'entité locale.

13. Procédé selon l'une quelconque des revendications 8 à 12, dans lequel chacune de l'entité locale et de l'entité d'infrastructure comprend soit une nation, soit une organisation multinationale.
